# EUROPEAN PATENT APPLICATION

(11) **EP 2 372 539 A2**
(43) Date of publication of application: **05.10.2011**
(21) Application number: 11152086.2
(22) Date of filing: 25.01.2011
(51) Int. Cl.: G06F 9/445, G06F 3/048

(54) **Method and apparatus for editing list in portable terminal**

(30) Priority: 11.02.2010 KR 20100012929
(71) Applicant: SAMSUNG ELECTRONICS CO., LTD., Suwon-si, Gyeonggi-do (KR)
(72) Inventor: Shin, Young Sun, Gyeonggi-do (KR); Kim, Kyoung Taek, Gyeonggi-do (KR)
(74) Representative: Jenkins, Richard Gavin

(57) **Abstract**

A method and an apparatus for editing a list in a portable terminal including a touch screen are provided. The method includes displaying a list screen including a plurality of items, displaying a moving affordance area for inputting a touch event for moving a position of a selected item when at least one of the plurality of items is selected, and moving the position of the selected item in accordance with the touch event. A user may thereby easily edit an arrangement order of items included in a list.

## Description

### BACKGROUND OF THE INVENTION

### 1. Field of the Invention:

The present invention relates to a method and an apparatus for editing a list in a portable terminal. More particularly, the present invention relates to an apparatus for editing a list in a portable terminal capable of easily changing an arrangement order of at least one of item output on a list in a state that a plurality of items are output as a list, and a method thereof.

### 2. Description of the Related Art:

A portable terminal is a terminal supporting various user functions based on mobility. The portable terminal has been used in widely varying fields due to its convenience of use and easy portability. The portable terminal has provided at least a short message transmitting/receiving function, a photographing function, a music listening function, a digital broadcasting service function, an electronic (E)-mail service function, and an instant messenger service function. The portable terminal provides various input schemes capable of easily operating the foregoing various functions. In particular, the portable terminal supports a touch screen that disposes a touch panel at a display panel to provide a convenient user interface.

Meanwhile, with the development of technology, the portable terminal may store a plurality of items. A conventional portable terminal provides only a function listing and displaying a plurality of items according to a determined rule (such as name, date, etc.) when an item is output. However, the conventional portable terminal has a problem in that it cannot arbitrarily change an arrangement order of listed items.

### SUMMARY OF THE INVENTION

An aspect of the present invention is to address the above-mentioned problems and/or disadvantages and to provide at least the advantages described below. Accordingly, an aspect of the present invention is to provide an apparatus for editing a list in a portable terminal capable of easily changing an arrangement order of items outputted on a list, and a method thereof.

In accordance with an aspect of the present invention, a method for editing a list in a portable terminal is provided. The method includes displaying a list screen including a plurality of items, displaying a moving affordance area for inputting a touch event for moving a position of a selected item if it is determined that at least one of the plurality of items is selected, and moving the position of the selected item corresponding to the touch event generated in the moving affordance area.

In accordance with another aspect of the present invention, an apparatus for editing a list in a portable terminal is provided. The apparatus includes a display panel for displaying a list screen including a plurality of items, and for displaying a moving affordance area for inputting a touch event for moving a position of a selected item if it is determined that at least one of the plurality of items is selected, a touch panel for generating an input signal corresponding to a touch event generated on the moving affordance area, and a controller for controlling movement of the position of the selected item according to the input signal.

As described above, in the method for editing a list in a portable terminal and an apparatus thereof according the present invention, a user can easily change an arrangement order of items outputted on a list.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following detailed description in conjunction with the accompanying drawings, in which:

FIG. 1 is a block diagram illustrating a configuration of a portable terminal supporting a list edit function according to an exemplary embodiment of the present invention;

FIG. 2 is a flowchart schematically illustrating a method for editing a list in a portable terminal according to an exemplary embodiment of the present invention;

FIG. 3 is a view of an example of a screen for illustrating a method for editing a list in a portable terminal according to an exemplary embodiment of the present invention;

FIG. 4 is a view of an example illustrating a selection method of a specific item changing an arrangement order according to an exemplary embodiment of the present invention;

FIG. 5 is a view of an example of a screen illustrating a method for editing a list in a portable terminal according to an exemplary embodiment of the present invention; and

FIG. 6 is a view of an example of a screen illustrating a method of editing a list in a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Prior to a detailed description, herein, a portable terminal according to exemplary embodiments of the present invention is a terminal supporting a list edit function. The portable terminal may, for example, include a mobile communication terminal, a Personal Digital Assistant (PDA), a Smart Phone, a Portable Multimedia Player (PMP), a Motion Picture Experts Group Audio Layer 3 (MP3) player, and a Navigation terminal.

Hereinafter, the mobile communication terminal will be described by way of example for convenience of explanation.

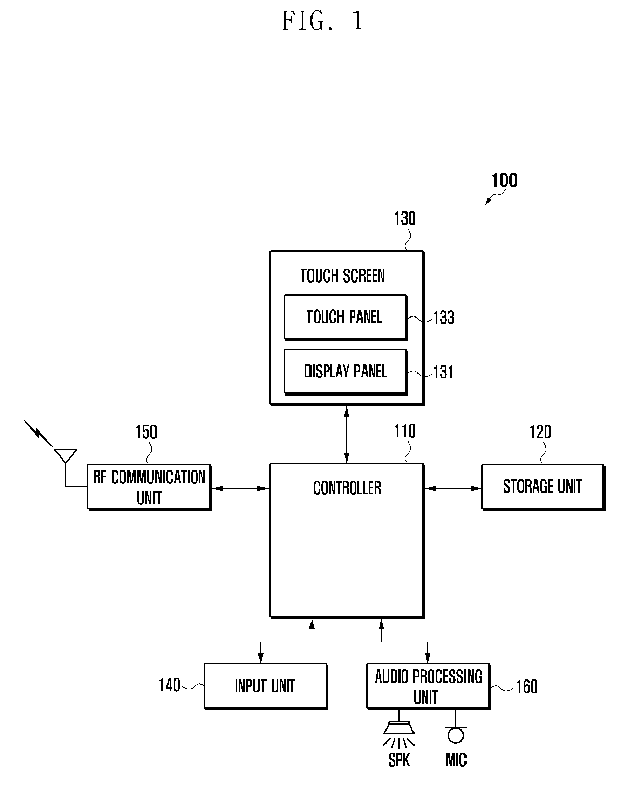

FIG. 1 is a block diagram illustrating a configuration of a portable terminal according to an exemplary embodiment of the present invention.

Referring to FIG. 1, the portable terminal 100 of the present invention may include an audio processing unit 160, a Radio Frequency (RF) communication unit 150, an input unit 140, a touch screen 130, a storage unit 120, and a controller 110. The touch screen 130 may include a display panel 131 and a touch panel 133. Meanwhile, the RF communication unit 150 can be omitted if the portable terminal 100 does not support a communication function. Further, if the portable terminal 100 provides only a touch screen 130 for generating an input signal, the input unit 140 can be omitted.

The portable terminal 100 of the present invention having the construction mentioned above may be configured to output a list screen including at least one item stored in the storage unit 120. For example, the portable terminal 100 may be configured to output a list screen including at least one item according to activation of an application program. When the portable terminal 100 enters an edit mode on a list screen, it may be configured to output a moving affordance area for controlling movement of an item selected by a user at one side of a screen and change a location movement of the selected item, namely, an arrangement order of items according to a touch event input from the moving affordance area. Accordingly, the portable terminal 100 allows a user to execute an arrangement order of items rapidly and easily. Hereinafter, respective constructions and functions of the portable terminal 100 will be described in more detail.

The RF communication unit 150 forms a communication channel for a voice call and a communication channel for transmitting data such as images under the control of the controller 110. Namely, the RF communication unit 150 forms a voice call channel, a data call channel, and a video phone call channel between mobile communication systems. To do this, the RF communication unit 150 may include an RF transmitter (not shown) up-converting a frequency of a transmitting signal and amplifying the signal, and an RF receiver (not shown) low-noise-amplifying a received signal and down-converting the signal. The portable terminal 100 may be configured to collect call log information generated according to an operation of the RF communication unit 150, and a list screen of the present invention may be configured to support the call log information as an item. That is, the list screen of the present invention can be configured by a list using the call log information as respective items.

The input unit 140 receives numerals or character information, and includes a plurality of input keys and function keys for setting all types of functions. The function keys may include arrow keys, side keys, and hot keys set to execute specific functions. Further, the input unit 140 generates key signals related to user settings and function control of the portable terminal 100, and transfers the key signals to the controller 110. The input unit 140 can be implemented, for example, by a QWERTY key pad, a 3*4 key pad, a 4*3 key pad, and a directional key pad including a plurality of keys. If the touch screen 130 of the portable terminal is a full touch screen type, the input unit 140 can be omitted or substituted by the touch screen 130.

The input unit 140 of the present invention may be configured to generate and transfer an input signal for activating a list screen corresponding to a specific menu or function according to a user operation, an input signal for activating an edit mode changing an arrangement order of the list, and an item selection signal for selecting at least one specific item in an output state of the list screen to the controller 110.

The audio processing unit 160 includes a speaker SPK playing audio data to be transmitted or received at the time of a call, and a microphone MIC collecting a user's voice or other audio signals at the time of a call. The audio processing unit 160 may be configured to output a corresponding audio signal if it is determined that a screen state changes. For example, the audio processing unit 160 may support sound effects according to various screens variation if it is determined that an item is selected in an output state of the list screen, if it is determined that a touch movement (scroll) event occurs, or if it is determined that an order of a selected item changes.

The touch screen 130 includes a display panel 131 and a touch panel 133. The touch screen 130 may include a configuration in which a touch panel 133 is provided at a front surface of the display panel 131.

The display panel 131 displays information input by a user or information provided to the user, as well as all types of menus of the portable terminal 100. Namely, the display panel 131 may be configured to provide various screens, such as an idle screen, a menu screen, a message creation screen, and a call screen, according to use of the portable terminal 100. In particular, the display panel 131 of an exemplary embodiment of the present invention may be configured to output a list screen including at least one item. Moreover, the display panel 131 may be configured to output a screen for instructing (highlighting) item selection on a list screen output according to a further input signal, a screen for outputting a moving affordance area for changing an arrangement order of specific items on the list screen, a screen for moving the selected specific items according to a touch event generated from the moving affordance area, and a screen for changing an arrangement order according to the movement of the selected specific items. The display panel 131 can be configured, for example, by a Liquid Crystal Display (LCD), Organic Light Emitting Diodes (OLED), or Active Matrix Organic Light Emitting Diodes (AMOLED).

The touch panel 133 may be provided to overlay the display panel 131, and generate a touch event according to contact of an object and transfer the generated touch event to the controller 110. In this case, the touch panel 133 is provided in a matrix pattern, and transfers corresponding location information with respect to a touch event and information regarding a type of the touch event generated on the touch panel 133 to the controller 110. There may be, for example, a touch down event generated if it is determined that an object contacts with the touch panel 133, a touch up or touch cancellation event generated according to contact cancellation of the object, a scroll or touch movement or touch drag event generated by moving a contact of the object in a touch down state in a given direction, or a flick event generated due to contact movement having acceleration in a given direction, as the types of the touch event.

The storage unit 120 may store an application program necessary for a function operation according to an exemplary embodiment of the present invention. If the portable terminal 100 is configured with the touch screen 130, the storage unit 120 may also store a key map or a menu map for operating the touch screen 130. Here, the key map and the menu map can be configured by various forms. For example, the key map may include a 3*4 key map, a QWERTY key map, or a control key map for controlling a currently activated application program. The menu map may include a menu map for controlling a currently activated application program or a menu map having various menus provided from the portable terminal 100 as an item.

In particular, the storage unit 120 of the present invention may be configured to output a list screen including at least one item and store an application program activating an edit mode according to an input signal. Furthermore, the storage unit 120 may store a list having a changed arrangement order according to a user operation (storage signal input) or a set schedule (predetermined period) if it is determined that the order of an item changes in an output state of the list screen. When an application program having a list of a next changed order is again activated, the storage unit 120 may be configured to transfer a list of the changed order to the controller 110. Next, the controller 110 may be configured to control the display panel 131 to display a list screen having the changed order.

The controller 110 may be configured to control power supply to respective constructions of the portable terminal 100 to support execution of an initialization procedure. If it is determined that the initialization procedure is terminated, the controller 110 may be configured to control signal flow for providing a list edit function according to an exemplary embodiment of the present invention with respect to the respective constructions. In more detail, if it is determined that an input signal activating an edit mode is input to the controller 110 from at least one of the input unit 140 or the touch panel 133 in an output state of a list screen including at least one item, the portable terminal can enter an edit mode.

Subsequently, an input for selecting a specific item is input to the controller 110, which controls the display panel 131 to output a moving affordance area at one side thereof. If it is determined that an edit mode is activated after a specific item is selected on the list screen, the controller 110 may be configured to control the display panel 131 to output the moving affordance area at one side thereof. The moving affordance area may be configured to include at least two directional soft keys. For example, if the list screen is arranged in multiple rows and one column, the moving affordance area includes an upward direction soft key and a downward direction soft key. If the list screen is arranged in multiple rows and multiple columns, the moving affordance area may be configured to include four directional soft keys (upward direction soft key, downward direction soft key, left soft key, and right soft key). Alternatively, the moving affordance area may be configured to include eight directional soft keys, for example, to support a diagonal movement.

Upon output of the moving affordance area, the controller 110 may be configured to control to selectively output a moving affordance area corresponding to a construction (e.g., multiple rows and one column, multiple rows and multiple columns) of the list screen. The moving affordance area can be output at a layer other than a layer on which items are output. Further, the moving affordance area is can be translucently output. The controller 110 may be configured to output a transparency control part controlling transparency of the moving affordance area at one side of the display panel 131 (one side of a list output area or the moving affordance area). Moreover, the moving affordance area can be output at a set position or a position adjacent to the selected item regardless of a position of the selected item. In addition, the position of the moving affordance area can be changed by a user. In more detail, the user may touch-move a part of the moving affordance area in a touch down state and cancel the touch to move the position of the moving affordance area. This solves a problem in that a moving affordance area may overlap with an item and hinder selection of a specific item.

The controller 110 moves the position of the selected specific item according to a touch event generated from the moving affordance area. For example, the controller 110 may be configured to change an order of a current item by an item of a previous or next position corresponding to a tap event of a directional soft key included in the moving affordance area. In the meantime, if it is determined that the touch down event is maintained for a predetermined time, the controller 110 may continuously move a specific item to a direction corresponding to a touched directional soft key. In this case, the controller 110 may move the specific item with a predetermined speed. Further, the controller 110 may be configured to accelerate and move the specific item.

If it is determined that a user taps an output area of another item on the list screen, the controller 110 highlights another touched item to inform the user that an item of which an order will be changed changes. Moreover, the controller 110 may be configured to change the list screen corresponding to a touch movement (scroll) event generated at an output area of the list. For example, if it is determined that the touch movement (scroll) event occurs in an upward direction in an output state of a first item to an eighth item, the controller 110 may be configured to remove items from the first item output at an uppermost position of the list screen and control to output a ninth item at a lowermost position of the list screen.

When the edit mode is terminated, the controller 110 may be configured to control the storage unit 120 to store list information with a changed arrangement order of items. The controller 110 may be configured to control the display panel 131 to output a list screen with a changed order according to an input signal activating an application program with a list of a changed arrangement order.

Meanwhile, the foregoing exemplary embodiment has been described to select one item by way of example. However, the present invention is not limited thereto. Namely, an exemplary embodiment of the portable terminal 100 of the present invention may be configured to support selection of at least one item including selection of plural items from a list outputting a plurality of items according to a user operation, and move at least one selected item according to a touch event generated at a moving affordance area. For example, if the touch panel 133 supports a multi-touch function, if the user touches another item in a touch down state of one specific item, the controller 110 can recognize that a plurality of items are selected. Further, if the user multi-touches two items, the controller 110 can, for example, recognize that all items located between two touched items are selected.

Although not shown in FIG. 1, the portable terminal 100 may further be configured to include structural elements having additional functions, such as a camera module for photographing images or moving images, a near distance communication module for near distance wireless communication, a broadcast receiving module for receiving broadcast, a digital sound source module such as an MP3 module, and an Internet communication module executing Internet functions. Since the structural elements can be variously changed according to convergence trends of a digital device, no such structural elements can be definitively listed. However, the portable terminal 100 may be configured to include structural elements equivalent to the foregoing structural elements.

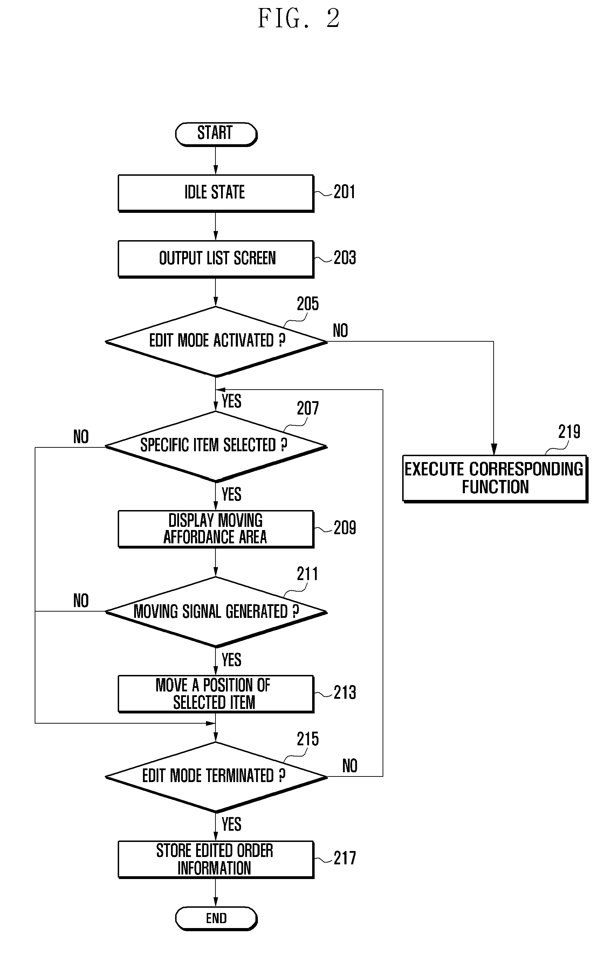

FIG. 2 is a flowchart schematically illustrating a method for editing a list in a portable terminal according to an exemplary embodiment of the present invention.

Referring to FIG. 1 and FIG. 2, in the list edit method of an exemplary embodiment of the present invention, when power is supplied to the portable terminal 100, the supplied power initializes respective structural elements of the portable terminal 100. After the initialization procedure is terminated, the controller 110 may control the display panel 131 to output a predetermined idle screen at step 201. In this procedure, the controller 110 may control the display panel 131 to output an idle screen if it is determined that the portable terminal 100 is out of a sleep state triggered because it is not used for a set time. If the display panel 131 is activated, the controller 110 may activate the touch panel 133 according to user settings to prepare for recognizing a user touch input.

Subsequently, if a user selects a specific user function outputting a list screen, the controller 110 may be configured to control the display panel 131 to output a list screen according to a selected user function at step 203. The list screen is a screen including at least one item, and may include, for example, a menu screen, a music file list screen, an image file list screen, a phone book screen, and a multi-image list screen. The list screen according to an exemplary embodiment of the present invention can be configured in multiple rows and one column, one row and multiple columns, or multiple rows and multiple columns.

Next, the controller 110 may determine whether an edit mode is activated at step 205. To do this, the portable terminal 100 may provide a key map or a hot key activating the edit mode. That is, a user of the portable terminal 100 may activate an edit mode by using a key map (e.g., soft key) output at one side of the list screen or a hot key allotted to the input unit 140 to edit a list screen including at least one item.

If it is determined that the edit mode is not activated at step 205, the controller 110 may control to execute a corresponding function according to an input signal at step 219. For example, if a signal activating a specific item is input on a music file list screen, the controller 110 may control to play a music file corresponding to a specific item. On the other hand, if it is determined that the edit mode is activated at step 205, the controller 110 may determine whether at least one item among items output on a list is selected at step 207. That is, to change an item arrangement order of a list, the controller 110 may determine whether there arises a touch event corresponding to a "Tap" canceling a touch within a predetermined time after a user of the portable terminal 100 touches down a specific item. If the touch panel 133 supports a multi-touch function, a user may select a plurality of items using the multi-touch. For example, the user may touch another item while in a touched state of one specific item, to select a plurality of items. Further, the user may multi-touch two items to select all items between the two items.

If it is determined that at least one specific item is not selected at step 207, the controller 110 proceeds to step 215 to be described below. On the other hand, if it is determined that at least one specific item is selected, the controller 110 may control the touch screen 130 to output a moving affordance area at one side of the display panel 131 at step 209. The moving affordance area may be output, for example, at a preset position of the display panel 131 or at a position adjacent to the selected item. Further, the moving affordance area can be moved. For example, if it is determined that the user creates a touch movement event in a specific direction in a touched down state of a part of the moving affordance area, the moving affordance area can move to the position corresponding to the touch movement event. This solves a problem in that a moving affordance area may overlap with an item and cause the user to not select the overlapped item. Furthermore, the moving affordance area may be output on an layer of a list output area or a separated layer, and may be configured to be translucently output. The controller 110 may output a transparency control part controlling transparency of the moving affordance area at one side of the display panel 131 (one side of a list output area or the moving affordance area). Further, the user may control transparency of the moving affordance area using a set function key (e.g., a volume key or an up/down direction key).

The moving affordance area may execute a function of receiving a touch event and moving a selected item. To do this, the moving affordance area may include at least two directional soft keys. For example, if the list screen is output in multiple rows and one column, the moving affordance area may include an upward direction soft key moving the selected item upward and a downward direction soft key moving the selected item downward. Moreover, if the screen is configured in multiple rows and multiple columns, the moving affordance area may include an upward direction soft key moving the selected item upward, a downward direction soft key moving the selected item downward, a right soft key moving the selected item right, and a left soft key moving the selected item left. However, the present invention is not limited thereto. For example, the moving affordance area may alternatively include eight directional soft keys to support diagonal movement. Moreover, the moving affordance area may be configured without a separate directional soft key. The controller 110 may control movement of the selected item corresponding to a touch event generated at the moving affordance area. The controller 110 of an exemplary embodiment of the present invention may determine a type of a list upon output of the moving affordance area, and selectively output a moving affordance area corresponding to the type of the list on the display panel 131.

Subsequently, the controller may determine whether a touch event (referred to as 'moving signal' hereinafter) for moving a position of the selected item from the moving affordance area is generated at step 211. That is, the controller 110 may determine whether a directional soft key included in the moving affordance area is touched. If it is determined that the moving signal is not generated at step 211, the controller 110 goes to step 215. On the other hand, if it is determined that the moving signal is generated, the controller may be configured to control the selected item to be moved to a given direction according to the moving signal at step 213.

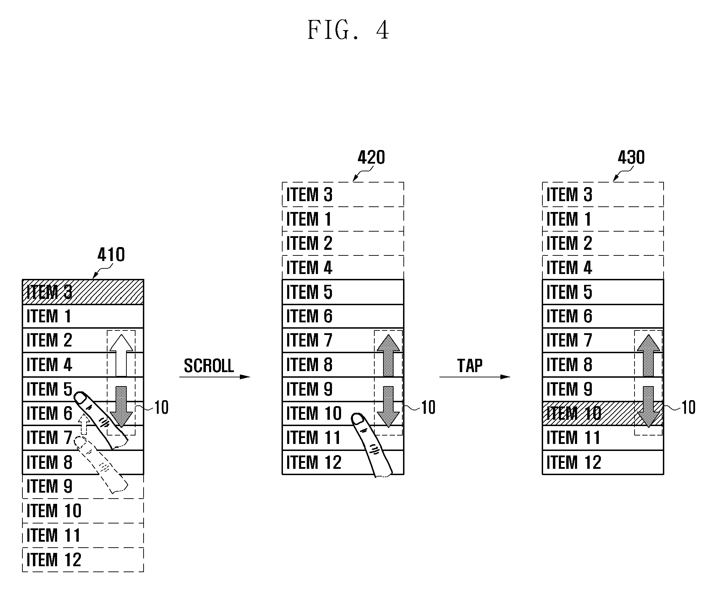

Next, the controller 110 determines whether an edit mode is terminated at step 215. If it is determined that an input signal for terminating the edit mode is not input, the controller 110 returns to step 207 and repeats the subsequent procedures. Namely, the user may select another item from a list output area to continuously change an arrangement order of the selected item or to change an arrangement order of another item. To select another item not output on the list output area, the user may generate a scroll up or down event from the list output area to output at least one item to the screen. A detailed description thereof will be explained with reference to FIG. 4 below. On the other hand, if it is determined that an input signal for terminating an edit mode is input at step 215, the controller 110 may control the storage unit 120 to store arrangement order information of changed items through a moving affordance area at step 217.

The foregoing exemplary embodiment has been described such that the moving affordance area is output at one side of the display panel 131 if it is determined that a specific item is selected in an active state of an edit mode. However, the present invention is not limited thereto. For example, the moving affordance area can be output if it is determined that an edit mode is activated after the selection of a specific item on a list screen.

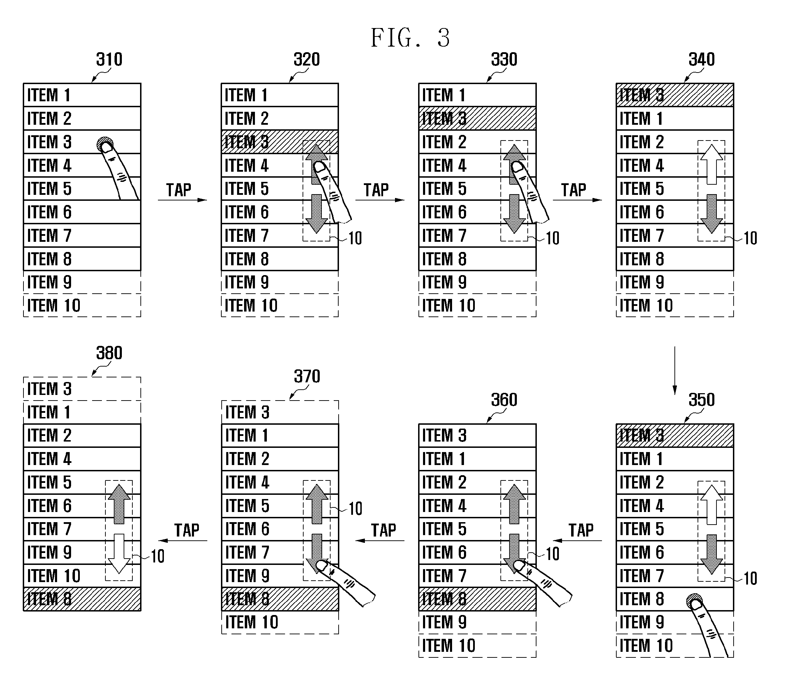

A screen interface output on a display panel will be explained in more detail with reference to FIG. 3 to FIG. 6.

FIG. 3 is a view of an example of a screen illustrating a method for editing a list in a portable terminal according to an exemplary embodiment of the present invention; and FIG. 4 is a view of an example illustrating a selection method of a specific item changing an arrangement order according to an exemplary embodiment of the present invention.

Prior to a more detailed description, the display panel 131 of the present invention may output a list screen including at least one item according to user operation of the touch panel 133 or the input unit 140. The list screen may be configured to include an indicator area outputting an indicator indicating a frequency environment for supporting a mobile communication function and an indicator indicating a residual amount of a battery, and a list output area. The list output area may be configured to include a title area of a list, an item area on which at least one item is output, a soft key area on which a key map, capable of activating a previous screen, an item, and a menu, is output, and an edit key area for entering an edit mode for editing an arrangement order of items included in a list. If the edit key is included in the menu, the edit key area can be omitted. The following exemplary embodiment will be described to show only an item area on the list screen.

Referring to FIG. 1 to FIG. 4, a user of the portable terminal 100 can touch the edit key to enter an edit mode in an output state of the list screen. Accordingly, as shown in a screen 310 according to a touch event generated at a corresponding area, the controller 110 may output a list screen including eight items, item 1, item 2, item 3, item 4, item 5, item 6, item 7, and item 8, according to a menu or a function selected by the user. Here, the eight items, item 1, item 2, item 3, item 4, item 5, item 6, item 7, and item 8, correspond to various user functions provided from the portable terminal 100. For example, eight items of item 1, item 2, item 3, item 4, item 5, item 6, item 7, and item 8 can be a music file, a moving image file, a photograph file, various items such as a menu item, a user information item described in a phone book, an item included in schedule information, and an item downloaded from a server through a web browser. Item 9 and item 10 are illustrated to show their presence on the portable terminal, but are not displayed on the screen shown in FIG. 3.

Next, a user of the portable terminal 100 may select a specific item for changing an order among items output on a list in an entered edit mode. For example, a user of the portable terminal 100 may touch an area of an item, namely, item 3 for changing an arrangement order, using a finger as shown in a screen 310 to select the item 3. The touch screen 130 based item selection scheme can change from an exemplary embodiment according to a portable terminal 100 designer's intention or a user's settings variation. For example, if it is determined that a user of the portable terminal 100 taps an area on which an item is output once or twice, the controller 110 may recognize that an item output on a corresponding area is selected. Furthermore, if the touch panel 133 supports a multi-touch function, if a user touches another item in a touch down state of a specific item, the controller 110 may recognize that a plurality of touched items are selected or that all items located between two touch items are selected.

If it is determined that at least one specific item is selected through the foregoing method, the controller 110 may output the moving affordance area 10 at one side of the display panel 131, as shown in screen 320. In addition, the controller 110 may be configured to highlight and display an area (e.g., a row) on which the item 3 is output such that a user may recognize that the item 3 is selected. In this example, as the list is formed in multiple rows and one column, the moving affordance area 10 may include a upward direction soft key and a downward direction soft key.

If the user taps an upward direction soft key of the moving affordance area 10 in a state of screen 320, the controller 110 may control to exchange a position of item 3 and a position of item 2 with each other, as shown in screen 330. In the same manner, if the user again taps the upward direction soft key of the moving affordance area 10 in a state of screen 330, the controller 110 may control to exchange and output a position of item 3 and a position of item 1 with each other as shown in screen 340. As in the screen 340, if the selected item 3 is located at an uppermost position of a list, the controller 110 may inactivate the upward direction soft key of the moving affordance area 10 to indicate that the item 3 does not move upward any more. A white upward direction soft key is shown on the screen 340 to indicate inactivation of the upward direction soft key.

If a user decides to change an arrangement order of another item in the state of screen 340, the user can tap an area on which the other item is located, namely, item 8 for changing the order as shown in screen 350. Meanwhile, to change an arrangement order of another item not yet output on a screen, the user may create a touch movement (scroll) event as shown in screen 410. That is, if it is determined that the user touches down an area on which the items are output and moves a finger in a direction of an upward in a touch down state, the touch panel 133 creates an upward scroll event. On the other hand, if it is determined that the user touches down an area on which the items are output and moves a finger to the downward direction in a touch down state, the touch panel 133 creates a downward scroll event.

If it is determined that the scroll event occurs, the controller 110 moves a list screen according to the scroll event. That is, the controller 110 may remove item 1 to item 4 from the list screen according to a scroll event as shown in screen 420, and control the display panel 131 to output item 9 to item 12, which were not output previously on the list screen, instead of the removed items. That is, the display panel 131 may output item 5 to item 12 in an order from an uppermost position to a lowermost position. Subsequently, the user may tap an area on which another item (e.g., item 10) for changing an arrangement order is output. If it is determined that the selection of the other item (item 10) is terminated, the controller 110 may control the display panel 131 to highlight and display the selected other item (item 10) as in the screen 430.

Next, as in the screen 350 or 430, after selecting another item (e.g., item 8 or item 1), a user can change an arrangement order of another item (item 8 or item 1). Hereinafter, a case of selecting a screen 360, namely, item 8, will be explained by way of example.

As shown in the screen 360, if the user taps a downward direction soft key of the moving affordance area 10 in a selected state of the item 8, the controller 110 may control to exchange item 8 and item 9 with each other as shown in screen 370. At this time, if the item 8 is located at a lowermost position of the list screen, the controller 110 may control the display panel 131 to fix and display a position of the item 8, and to move and display other items (item 1 to item 7 and item 9) upward. That is, the display panel 131 may remove the item 3 from a screen, moves item 1, item 2, and item 4 to item 7 upward, and outputs item 9 between item 7 and item 8 under the control of the controller 110. In the same manner, if a user taps a downward direction soft key of the moving affordance area 10 in a state of screen 370, the controller 110 may exchange positions of item 8 and item 10 with each other.

That is, the display panel 131 may remove item 1 from the screen, move item 2, item 4 to item 7 and item 9 upward, and outputs item 10 between item 9 and item 8 under the control of the controller 110. If it is determined that the item 8 moves to a final position of entire lists, the controller 110 may inactivate a downward direction soft key of the moving affordance area 10 to indicate that the item 8 does not move downward any more, as in the screen 380.

The foregoing embodiment has been described such that the specific item is fixed to a lowermost position of the list screen if a downward moving signal is input in a state that the specific item is located at a lowermost position of the list screen. However, the present invention is not limited thereto. For example, after a user selects item 8 located at a lowermost position in an output state of item 1 to item 8, if the user taps a downward direction soft key of the moving affordance area 10, the controller may control to move the selected item 8 to the uppermost position and to output item 8 to item 15 on a list screen. Further, the controller 110 may control to move the item 8 to a center of the screen and to output item 5 to item 12 on a list screen. This allows a user to easily recognize items located above and below item 6 for changing an order.

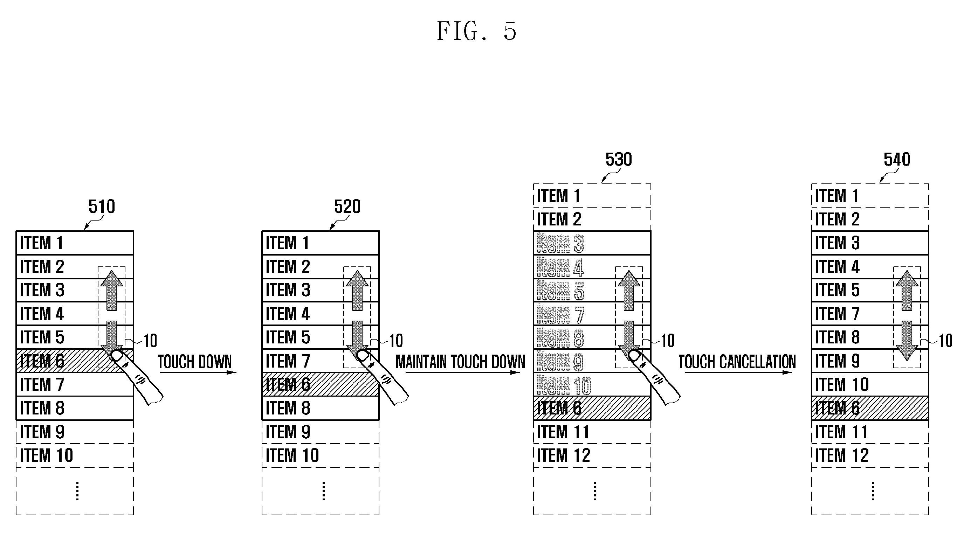

FIG. 5 is a view of an example of a screen illustrating a method for editing a list in a portable terminal 100 according to an exemplary embodiment of the present invention. Hereinafter, it is assumed that a user selects a specific item (e.g., item 6) for changing an arrangement order from a list screen to output the moving affordance area 10.

Referring to FIG. 1 and FIG. 5, a user may touch down a downward direction soft key of the moving affordance area 10 as shown in screen 510 to change an arrangement order of item 6. If the touch down event occurs, the controller 110 may be configured to exchange positions of item 6 and item 7 with each other as shown in screen 520. Next, the controller 110 may determine whether the touch down event is cancelled. If it is determined that the touch down is not cancelled within a predetermined time, the controller 110 moves item 6 downward as shown in screen 530, sequentially removes items from a uppermost position from the screen if the item 6 reaches a lowermost position of the list screen, and controls the display panel 131 to sequentially output subsequent items not previously output on the list screen at an upper side of the item 6. The controller 110 may move the items with predetermined speed or accelerate and move the items.

The item 6 can maintain the movement until the touch cancellation event occurs. Further, if it is determined that the item 6 moves to a final position of entire lists, the controller 110 may stop the movement of items. For example, if it is determined that a touch cancellation event occurs after a touch down of a downward direction soft key of the moving affordance area 10 maintains for a predetermined time as in screen 530, the controller 110 may remove item 1 and item 2 from the screen as in screen 540, and controls the display panel 131 to output a list screen with an arrangement order of item 3 to item 5, item 7 to item 10, and item 6, as ordered from an uppermost position. The controller 110 may control to output item 6 at a center of the list screen as illustrated in a description of FIG. 3 when the touch cancellation event occurs to output a list screen with a changed arrangement order. However, if it is determined that the item 6 moves to a final position of the entire lists, the controller 110 may control not to output the item 6 at a center of a list screen, but to output it at a lowermost position of the list screen.

The foregoing exemplary embodiment has been explained in a case that an order of the item 6 and the item 7 changes when a touch down event occurs on screen 510. The present invention is not limited thereto. Namely, if the touch down event occurs, the present invention may be configured to perform no operation. If a tap event occurs, it may be configured to change the order of the item 6 and the item 7. In this case, the tap event is a touch cancellation event occurring within a predetermined time.

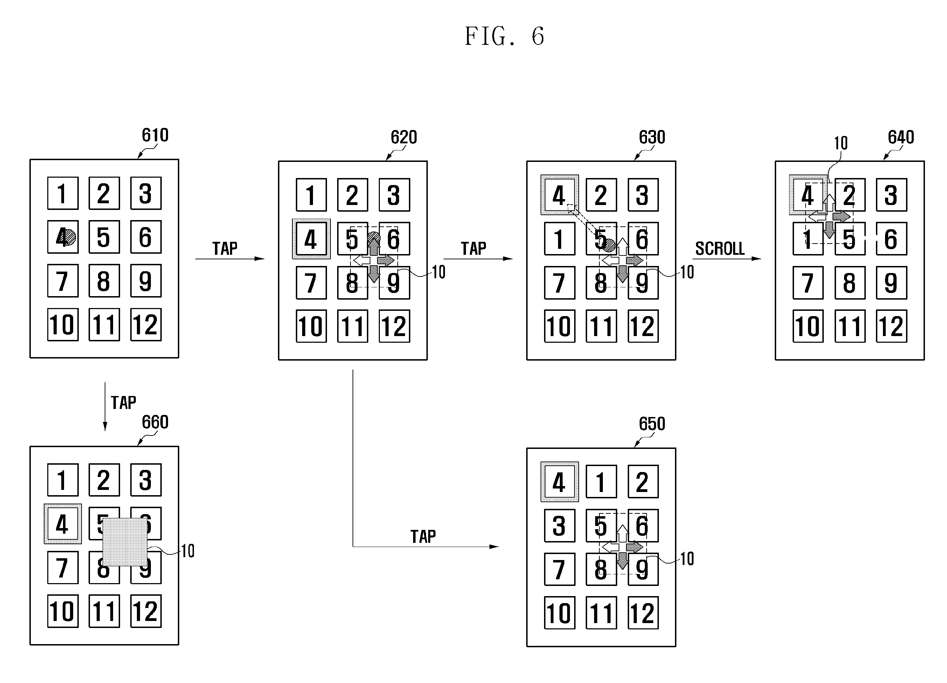

FIG. 6 is a view of an example of a screen illustrating a method for editing a list in a portable terminal according to an exemplary embodiment of the present invention.

Referring to FIG. 1 and FIG. 6, the display panel 131 of the present invention may output a list screen configured in multiple rows and multiple columns according to a menu or a function selected by a user as shown in screen 610. In this example, the user may tap an area on which item 4 is output to select the item 4.

If it is determined that the item 4 is selected on screen 610, as shown in screen 620, the controller 110 may highlight the item 4, and control the display panel 131 to output the moving affordance area 10 at one side thereof. In this case, the moving affordance area 10 may include four directional soft keys (upward direction soft key, downward direction soft key, left soft key, and right soft key). However, the present invention is not limited thereto. For instance, the moving affordance area 10 may alternatively be configured to include eight directional soft keys to control diagonal movement. Further, as shown in screen 660, the moving affordance area 10 may be configured without a directional soft key. In this case, the moving affordance area 10 may generally operate like a touch pad used in a notebook computer. That is, the item 4 may move corresponding to a user's touch movement (scroll) event generated on the moving affordance area 10.

In the state of the screen 620, if the user taps an upward direction soft key of the moving affordance area 10, the controller 110 may control to change the positions of item 1 and item 4 as in screen 630. Moreover, if it is determined that the user taps the upward direction soft key of the moving affordance area 10 in a state of screen 620, the controller 110 may move the item 4 to a position of the item 1 of screen 620 as in screen 650, move positions of item 1 to item 2 right, and move item 3 to a position of item 4 of screen 620.

The user may also move the position of the moving affordance area 10. For example, if the user touches down a part of the moving affordance area 10 as shown in screen 630, and generates a touch movement (scroll) event to a direction of item 4 in the touch down state, the controller 110 may move the position of the moving affordance area 10 corresponding to the touch movement (scroll) event as illustrated in screen 640. Through this, the present invention can prevent a problem in that a user cannot select items displayed to overlap with the moving affordance area 10.

It is shown in FIG. 6 that a corresponding directional soft key of the moving affordance area 10 is inactivated if it is determined that an item is located at a final position. However, the present invention is not limited thereto. For example, it is shown that a left soft key is inactivated on screen 620. However, the controller 110 may be configured to control not to inactivate the left soft key, and to change positions of item 4 and item 3 if a user taps the left soft key.

The method and apparatus for editing a list in a portable terminal according to an exemplary embodiment of the present invention mentioned above may easily change an arrangement order of items output on a list.

While the invention has been shown and described with reference to certain exemplary embodiments thereof, it will be understood by t those skilled in the art that various changes in form and details may be made therein without departing from the spirit and scope of the invention as defined by the appended claims and their equivalents.

## Claims

1. A method for editing a list in a portable terminal 100 comprising a touch screen, the method comprising:
displaying a list screen including a plurality of items (203);
determining whether an editing mode for editing an arrangement order of the items is activated (205);
displaying a moving affordance area for inputting a touch event for moving a position of a selected item if at least one of the plurality of items is selected while the editing mode is activated (207, 209); and
moving the position of the selected item in response to a touch event generated in the moving affordance area (211, 213).

2. The method of claim 1, wherein the displaying of the moving affordance area (209) comprises:
displaying the moving affordance area including an upward direction soft key and a downward direction soft key if the list screen is configured in multiple rows and a single column; and
displaying the moving affordance area including at least four directional soft keys if the list screen is configured in multiple rows and multiple columns.

3. The method of claim 2, wherein the moving of the selected item (213) comprises at least one of:
moving the position of the selected item to a corresponding direction by a predetermined distance if it is determined that a touch down event or a tap event of the directional soft key occurs; and
continuously moving the position of the selected item until the touch is cancelled or until the selected item moves to a final position of an entire list when the directional soft key is touched for a predetermined period of time.

4. The method of claim 1, wherein the displaying of the moving affordance area (209) comprises one of:
displaying the moving affordance area at a preset position of the list screen; and
displaying the moving affordance area at a position in accordance with a position of the selected item.

5. The method of claim 1, further comprising:
controlling transparency of the moving affordance area.

6. The method of claim 1, further comprising:
moving a position of the moving affordance area in accordance with a touch movement event generated in a state that a part of the moving affordance area is touched down.

7. The method of claim 1, further comprising:
storing an arrangement order of the items edited by the movement of the selected item (217).

8. The method of claim 1, further comprising:
moving a list screen in accordance with a touch movement signal generated on the list screen.

9. An apparatus for editing a list in a portable terminal (100), the apparatus comprising:
a display panel (131) for displaying a list screen including a plurality of items, and for displaying a moving affordance area (10) in a side of the display panel for receiving a touch event that moves a position of a selected item when at least one of the plurality of items is selected;
a touch panel (133) for generating an input signal in response to a touch event generated on the moving affordance area (10); and
a controller (110) for controlling the movement of the position of the selected item according to the input signal.

10. The apparatus of claim 9, further comprising:
a storage unit (120) for storing a list comprising a changed arrangement order in response to the input signal.

11. The apparatus of claim 9, wherein the moving affordance area (10) comprises an upward direction soft key and a downward direction soft key if the list screen is configured in multiple rows and a single column, and wherein the moving affordance area comprises at least four directional soft keys if the list screen is configured in multiple rows and multiple columns.

12. The apparatus of claim 11, wherein the controller (110) moves the position of the selected item in a corresponding direction by a predetermined distance when a touch down event or a tap event of the directional soft key occurs; and continuously moves the position of the selected item until a touch is cancelled or until the selected item moves to a final position of an entire list if the directional soft key is touched for a predetermined period of time.

13. The apparatus of claim 11, wherein the controller (110) controls an inactivation of a directional soft key of a corresponding direction if the selected item moves to an uppermost position or a lowermost position of entire lists according to a touch event generated from the moving affordance area (10).

14. The apparatus of claim 9, wherein the controller (110) moves a position of the moving affordance area (10) in accordance with a touch movement event generated in a state that a part of the moving affordance area (10) is touched down.

15. The apparatus of claim 9, wherein the display panel (131) further displays at a side of the display panel a transparency part for controlling a transparence of the moving affordance area (10).
